# EUROPÄISCHE PATENTSCHRIFT

(11) **EP 2 051 101 B1**
(45) Veröffentlichungstag und Bekanntmachung des Hinweises auf die Patenterteilung: **21.12.2011**
(21) Anmeldenummer: 07020250.2
(22) Anmeldetag: 16.10.2007
(51) Int. Cl.: G01S 7/497

(54) **Optische Sensoranordnung und Verfahren zur optischen Detektion von Objekten**
Optical sensor assembly and method for optical detection of objects
Agencement de capteur optique et procédé destinés à la détection optique d'objets

(43) Veröffentlichungstag der Anmeldung: 22.04.2009
(73) Patentinhaber: SICK AG, 79183 Waldkirch/Breisgau (DE)
(72) Erfinder: Mack, Stefan, Dr., 79104 Freiburg (DE)
(74) Vertreter: Manitz, Finsterwald & Partner GbR

(56) Entgegenhaltungen:
- EP-A- 0 198 253
- EP-A- 1 321 777
- EP-A- 1 632 790
- EP-A- 1 652 420
- WO-A-2007/019195
- VELLEKOOP J M ET AL: "FOCUSING COHERENT LIGHT THROUGH OPAQUE STRONGLY SCATTERING MEDIA" OPTICS LETTERS, OSA, OPTICAL SOCIETY OF AMERICA, WASHINGTON, DC, US, Bd. 32, Nr. 16, 15. August 2007 (2007-08-15), Seiten 2309-2311, XP001506776 ISSN: 0146-9592

## Beschreibung

Die Erfindung betrifft eine optische Sensoranordnung zur Detektion von Objekten in einem Überwachungsraum, mit einer kohärenten Lichtquelle, die Licht in einen zu überwachenden Überwachungsraum aussendet, und wenigstens einem Lichtempfänger zum Empfang von Licht, das von einem Objekt im Überwachungsraum reflektiert wird, und zur Erzeugung eines Empfangssignals. Die Erfindung betrifft weiterhin ein Verfahren zur optischen Detektion von Objekten in einem Überwachungsraum, bei dem der Überwachungsraum mit kohärentem Licht beleuchtet wird und aus dem Überwachungsraum reflektiertes Licht zur Erzeugung eines Empfangssignals verwendet wird.

Bei so genannten tastenden optischen Sensoren wird Licht in einen Überwachungsraum gesendet. Gegebenenfalls an einem Objekt reflektiertes Licht wird mit Hilfe einer Empfangseinrichtung detektiert und zur Erzeugung eines Empfangssignals verwendet. Als Objekte sollen im vorliegenden Zusammenhang je nach Anwendung nicht nur Gegenstände sondern auch Personen oder Körperteile von Personen verstanden werden. Eine Lichtempfangseinrichtung dient der Detektion von Licht, das von einem gegebenenfalls im Überwachungsraum befindlichen Objekt zurückreflektiert wird. Die Lichtquelle kann hinter einer Sendeoptik angeordnet sein und der Lichtempfänger hinter einer Empfangsoptik, die die Empfangsapertur definiert.

Derartige Sensoren werden als Objektfeststellungssensor zum Beispiel zur Sicherung von Maschinen, wie zum Beispiel Gesenkpressen, Biegemaschinen, Schneidemaschinen, Robotern oder sonstigen Maschinen mit beweglichem Werkzeug eingesetzt. Sofern bei solchen Maschinen ein unzulässiges Objekt in dem als Überwachungsraum definierten Gefahrenbereich der Maschine detektiert wird, muss ein Warnsignal oder ein Abschaltsignal erzeugt werden, um die Maschinenbewegung zu unterbrechen.

Lichttastsysteme zur Feststellung, ob sich Objekte in einem Überwachungsraum befinden, sind zum Beispiel in EP 0 198 253 B1 beschrieben.

Andere Sensoren dienen zum Beispiel der Entfernungsmessung. So kann zum Beispiel bei einem Entfernungsmesser nach dem Triangulationsprinzip aus dem Auftreffpunkt des aus dem Überwachungsraum zurückreflektierten Lichtes an einem Lichtempfänger auf die Entfernung des reflektierenden Objektes geschlossen werden. Bei anderen Entfernungsmessern wird aus der Lichtlaufzeit des in den Überwachungsraum gesendeten und am Objekt reflektierten Lichtes auf die Entfernung des Objektes geschlossen.

Je weiter ein gegebenenfalls zu detektierendes Objekt von dem tastenden optischen Sensor entfernt ist, desto weniger Lichtleistung wird in Richtung der Empfängeroptik zurückreflektiert. Insofern sind tastende optische Sensoren in ihrer Reichweite "energetisch" beschränkt. Ab einer Grenzreichweite wird nicht mehr genügend Lichtleistung vom Objekt in Richtung der Empfängeroptik reflektiert, um eine ausreichend sichere Detektion zu ermöglichen.

Um die energetische Reichweite zu erhöhen, können als zu detektierende Objekte stark reflektierende Objekte oder Objekte mit Retroreflektoren verwendet werden, bei denen das vom Sensor ausgesendete Licht gerichtet in die Empfangsoptik zurückgestrahlt wird.

In den meisten Anwendungen, insbesondere in der Sicherheitstechnik, muss jedoch ein unpräpariertes Objekt (zum Beispiel eine Person oder ein Körperteil) detektiert werden. Die Reflexionseigenschaften sind dann nicht bekannt. Daher muss für die Auslegung des Sensors der ungünstigste Fall einer diffusen Reflexion angenommen werden, was zum Beispiel für Kleidung in der Regel zutrifft.

Bei einer diffusen, also streuenden Reflexion wird das reflektierte Licht über den gesamten Halbraum zurückgestrahlt. Nur ein geringer Bruchteil des in Richtung des Überwachungsraums gesendeten Lichts wird also zu der Empfängeroptik zurückgestrahlt und trägt zum Detektionssignal bei. I. N. Vellekoop und A. P. Mosk beschreiben in Optics Letters 2007, Seiten 2309 ff. ("Focusing coherent light through opaque strongly scattering media") die Fokussierung von kohärentem Licht, das durch streuende Medien transmittiert wird.

WO 2007/019195 A2 betrifft eine Detektoreinrichtung, die dazu ausgelegt ist, eine durch Luftverwirbelungen bedingte Aufweitung eines Laserstrahls zu kompensieren.

EP 1 652 420 A1 und EP 1 632 790 A2 beschreiben eine optische Sensoranordnung mit den Merkmalen des Oberbegriffes des Anspruches 1.

Es ist die Aufgabe der vorliegenden Erfindung, eine optische Sensoranordnung und ein Verfahren zur optischen Detektion von Objekten in einem Überwachungsraum anzugeben, die eine erhöhte energetische Reichweite bzw. eine bessere Nutzung des aus dem Überwachungsraum reflektierten Lichts ermöglichen.

Diese Aufgabe wird mit einer optischen Sensoranordnung mit den Merkmalen des Anspruchs 1 bzw. einem Verfahren zur optischen Detektion mit den Merkmalen des Anspruchs 13 gelöst. Unteransprüche sind auf besondere Ausführungsformen und Ausgestaltungen gerichtet.

Insbesondere zeichnet sich eine erfindungsgemäße optische Sensoranordnung durch einen einstellbaren Modulator im Strahlengang des ausgesendeten Lichtes aus, der zur räumlichen Modulation des in den Überwachungsraum gesendeten Lichtes dient. Eine mit dem Modulator verbundene Regeleinrichtung dient zur Einstellung der räumlichen Modulation des in den Überwachungsraum gesendeten Lichtes in Abhängigkeit des Empfangssignals. Bei einem erfindungsgemäßen Verfahren zur optischen Detektion von Objekten in einem Überwachungsraum wird das in den Überwachungsraum gesendete Licht in Abhängigkeit des Empfangssignals räumlich moduliert.

Die erfindungsgemäße optische Sensoranordnung bzw. das erfindungsgemäße Verfahren zur optischen Detektion ermöglichen mit Hilfe der räumlichen Modulation des in den Überwachungsraum gesendeten Lichtes einen Ausgleich der diffusen Streueigenschaften eines Objekts im Überwachungsraum in Abhängigkeit des Empfangssignals. Nach Art eines Regelkreises wird die räumliche Modulation derart gewählt, dass das Empfangssignal gewünschte Eigenschaften hat. Insbesondere kann dazu mit dem Modulator die Wellenfront des in den Überwachungsraum gesendeten kohärenten Lichts lokal verändert bzw. angepasst werden.

Vorzugsweise wird die Phase des in den Überwachungsraum gesendeten Lichtes räumlich moduliert bzw. der Modulator des erfindungsgemäßen optischen Sensors ist zur räumlichen Modulation der Phase ausgestaltet. Die räumliche Phasenmodulation kann dabei derart gewählt werden, dass die Phasenverschiebung am reflektierenden Objekt, die aufgrund dessen diffuser Streueigenschaften hervorgerufen wird, gerade kompensiert wird.
So kann zum Beispiel erreicht werden, dass das reflektierte Licht an einem gewünschten Punkt konstruktiv interferiert.

Besonders vorteilhaft ist es, wenn die Regeleinrichtung den Modulator derart einstellt, dass die räumliche Modulation der Phase des in den Überwachungsraum gesendeten Lichtes derart ausgewählt ist, dass das an dem Objekt in dem Überwachungsraum reflektierte Licht auf den wenigstens einen Lichtempfänger gerichtet ist, also zum Beispiel dort konstruktiv interferiert.

Da mit der erfindungsgemäßen optischen Sensoranordnung bzw. mit dem erfindungsgemäßen Verfahren nur das von der Lichtquelle ausgesendete Licht den Reflexionseigenschaften des im Überwachungsraum gegebenenfalls befindlichen Objekts angepasst ist, wird auch nur dieses in Richtung des Lichtempfängers in gerichteter Form zurückreflektiert. Demgegenüber wird Störlicht nach wie vor in den kompletten Halbraum abgestrahlt. Auf diese Weise erhöht sich der am Empfänger ankommende Signalpegel des Empfangssignals gegenüber dem Störlicht, was effektiv zu einer Erhöhung der energetischen Reichweite führt und das Signal-Rauschverhältnis signifikant verbessert.

Ist zum Beispiel ein unbekanntes Objekt in großer Reichweite zu detektieren, dann kann über einen initialen Einstellalgorithmus der Modulator zu Beginn des Detektionsvorgangs auf ein maximales Detektionssignal hin optimiert werden. Zum Beispiel bei einer Bewegung des Objektes kann das Modulationsmuster räumlich nachgeführt werden, um während des weiteren Regelvorganges den Regelaufwand zu reduzieren.

Bei einer anderen Ausführungsform der erfindungsgemäßen optischen Sensoranordnung ist die Regeleinrichtung andererseits derart ausgestaltet, dass sie den Modulator zur Begrenzung der Signaldynamik des Empfangssignals einstellt. Eine entsprechende Ausgestaltung des erfindungsgemäßen Verfahrens sieht vor, dass das in den Überwachungsraum gesendete Licht derart in Abhängigkeit des Empfangssignals geregelt wird, dass die Signaldynamik des Empfangssignals unterhalb eines Schwellwerts liegt, der zum Beispiel derart ausgewählt ist, dass keine Übersteuerung des Lichtempfängers auftreten kann.

Tritt zum Beispiel ein hoch reflektierendes Objekt oder ein retroreflektierendes Objekt in den Überwachungsraum ein, so kann bei herkömmlichen Lichttastern eine Übersteuerung des Lichtempfängers auftreten. Mit der optischen Sensoranordnung gemäß der bevorzugten Ausführungsform bzw. einem Verfahren nach der bevorzugten Ausgestaltung kann die Wellenfront des in den Überwachungsraum gesendeten Lichtes derart durch räumliche Modulation manipuliert werden, dass das empfangene Lichtsignal einem Lichtsignal mit einem höheren diffusen Anteil entspricht. Das am Lichtempfänger empfangene Lichtsignal wird dementsprechend reduziert, wodurch die Signaldynamik begrenzt wird.

Der Modulator zur räumlichen Modulation des in den Überwachungsraum gesendeten Lichtes kann bei einer einfachen Ausgestaltung eine Flüssigkristallmatrix umfassen, um einen Flüssigkristallmodulator, insbesondere einen Flüssigkristallphasenmodulator, zu bilden. Die einzelnen Elemente der Flüssigkristallmatrix werden von der Regeleinrichtung angesteuert, um zum Beispiel die Phase des in den Überwachungsraum gesendeten Lichtes räumlich in gewünschter Weise zu modulieren.

Um eine Veränderung der Verhältnisse im Überwachungsraum detektieren zu können, wird bei einer vorteilhaften Ausgestaltung des Verfahrens die räumliche Modulation in Abhängigkeit des Empfangssignals fortlaufend oder in vorgegebenen zeitlichen Abständen eingestellt.

Zu einem früheren Zeitpunkt eingestellte Modulationsmuster können gegebenenfalls berücksichtigt werden, um den Regelaufwand zu verringern, wenn die Einstellung nur nachgeführt werden muss, also zum Beispiel wenn sich das Objekt bewegt. Eine bevorzugte Ausgestaltung des erfindungsgemäßen optischen Sensors weist dazu eine entsprechende Speichereinrichtung auf.

Das erfindungsgemäße Verfahren kann insbesondere vorteilhaft bei optischen Sensoranordnungen eingesetzt werden, die nach dem Lichttastprinzip arbeiten, also Licht, das in einen Überwachungsraum gesendet wird und dort gegebenenfalls reflektiert wird, auswerten. Ausführungsformen der erfindungsgemäßen optischen Sensoranordnung betreffen dementsprechend Sicherungssensoren, die Gegenstände in einem Überwachungsraum detektieren, Triangulationsmesssensoren, die die Entfernung von Gegenständen im Überwachungsraum bestimmen oder zum Beispiel Lichtlaufzeitsensoren, die die Entfernung von Gegenständen aus der Lichtlaufzeit des ausgesendeten und reflektierten Lichts bestimmen.

Die Erfindung wird nachfolgend anhand der Figuren, die eine erfindungsgemäße Ausgestaltung zeigen, beispielhaft erläutert. Dabei zeigen
- Fig. 1: eine schematische Darstellung einer optischen Sensoranordnung bei der Durchführung eines erfindungsgemäßen Verfahrens und
- Fig. 2: eine schematische Darstellung einer optischen Sensoranordnung mit deaktiviertem Modulator.

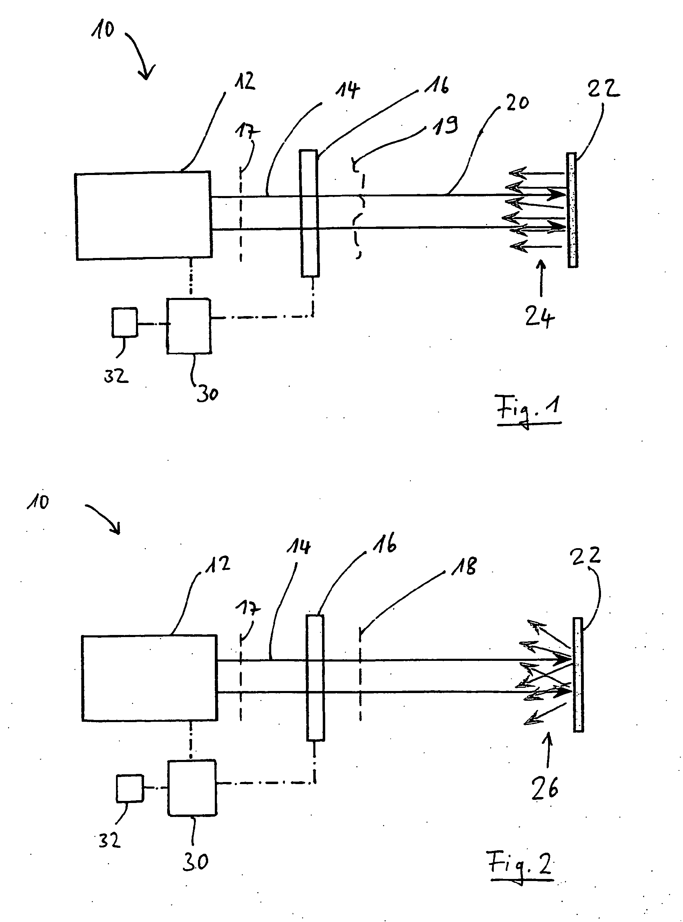

Die Fig. 1 und 2 zeigen den prinzipiellen Aufbau einer erfindungsgemäßen Sensoranordnung 10, wie sie zum Beispiel zur Feststellung verwendet wird, ob in einem Überwachungsraum ein Objekt 22 vorhanden ist oder nicht. Der Überwachungsraum kann dabei zum Beispiel der Gefahrenbereich einer Maschine, zum Beispiel einer Presse sein. Befindet sich in dem Gefahrenbereich zum Beispiel ein Körperteil einer Bedienperson, so muss die Presse gestoppt werden und/oder ein Warnsignal erzeugt werden.

Eine entsprechende optische Sensoranordnung 10 weist eine kohärente Lichtquelle und eine entsprechende Empfängereinheit auf. Bei der gezeigten Ausführungsform sind diese Elemente in an sich bekannter Weise als Einheit zusammengefasst und werden im Folgenden als Sensor 12 bezeichnet. Die kohärente Lichtquelle in dem Sensor 12 strahlt kohärentes Licht 14 in einen Überwachungsraum ab. Befindet sich in dem Überwachungsraum ein Objekt 22, so wird das Licht reflektiert.

Bei der gezeigten erfindungsgemäßen Ausführungsform befindet sich im Strahlengang des ausgesendeten Lichts 14 ein Modulator 16 zur räumlichen Modulation der Phase des ausgesendeten Lichtes. In Fig. 2 ist dieser Modulator nicht aktiv. Fig. 1 zeigt hingegen einen Betriebszustand, in dem der Modulator 16 aktiv ist.

Der Modulator 16 ist mit einer Regeleinheit 30 verbunden, die andererseits mit der Empfangseinrichtung des Sensors 12 verbunden ist. Bei dem Modulator 16 kann es sich um einen Flüssigkristallphasenmodulator handeln, der mehrere Flüssigkristallelemente aufweist, die mit Hilfe der Regeleinrichtung 30 angesteuert werden. Die Regeleinrichtung 30 kann somit in Abhängigkeit des Empfangssignals, das an der Empfangseinrichtung des Sensors 12 empfangen wird, mit Hilfe des Modulators 16 die Wellenfront des ausgesendeten Lichtes lokal verändern, also insbesondere der Phase eine räumliche Modulation aufprägen.

Mit der Regeleinrichtung 30 ist eine Speichereinrichtung 32 verbunden, in der zu früheren Zeitpunkten am Modulator 16 eingestellte Modulationsmuster abgelegt sein können.

### Die Funktionsweise der gezeigten Ausführungsform ist wie folgt:

Mit Hilfe der kohärenten Lichtquelle des Sensors 12 wird kohärentes Licht 14 in einen Überwachungsraum gesendet. Das kohärente Licht weist in der Regel eine im Wesentlichen ebene Wellenfront 17 auf. Wenn, wie in Fig. 2 dargestellt, der Modulator 16 nicht aktiv ist, ist er transparent und lässt das einfallende Licht 14 ungehindert durchtreten. Eine Wellenfront 18 ist also nach dem Durchtritt durch den Modulator 16 noch immer eben. Das Licht fällt auf ein gegebenenfalls im Überwachungsraum vorhandenes Objekt 22 und wird von diesem reflektiert. In der Regel ist davon auszugehen, dass ein solches Objekt diffus reflektierend ist, wie es zum Beispiel der Fall ist, wenn ein Körperteil oder Kleidung in dem Überwachungsraum das Licht reflektieren. Das reflektierte Licht 26 wird dementsprechend regellos zurück in den Halbraum vor dem Objekt 22 reflektiert. Nur ein geringer Teil des diffus in den Halbraum zurückreflektierten Lichts trifft wieder auf den Sensor 12 und damit auf die darin befindliche Empfangseinrichtung. Je weiter das zu detektierende Objekt 22 von dem Sensor 12 entfernt ist, desto geringer ist die Empfangsleistung.

Wie es in Fig. 1 gezeigt ist, kann bei der erfindungsgemäßen Ausführungsform das von dem Sensor 12 ausgesendete Licht 14 in seiner Phase mit Hilfe des Modulators 16 räumlich moduliert werden. Dazu werden die einzelnen Flüssigkristallelemente des Modulators 16 mit Hilfe der Regeleinrichtung 30 angesteuert. Nach dem Durchtritt durch den Modulator 16 ist dementsprechend die Wellenfront 19 nicht mehr eben. Das so manipulierte Licht 20 fällt auf das Objekt 22 und wird von diesem reflektiert.

Bei geeigneter Manipulation der Wellenfront 19 durch den Modulator 16 ist es möglich, eine räumliche Phasenverteilung zu finden, die die diffusen Streueigenschaften des Objektes 22 kompensiert. Die Phase des Lichtes wird dabei lokal derart verändert, dass konstruktive Interferenz des reflektierten Lichts gerade in Richtung des Lichtempfängers in dem Sensor 12 auftritt. Das reflektierte Licht 24 wird dann zu einem sehr viel größeren Anteil zurück in Richtung des Sensors 12 und der darin befindlichen Empfangseinrichtung in gerichteter Form zurückreflektiert, und das Signal an der Empfangseinrichtung wird größer. Das Signal-Rauschverhältnis verbessert sich und auch Objekte in größerer Entfernung können detektiert werden.

Zur Auswahl des optimalen Modulationsmusters am Modulator 16 wird mit Hilfe der Regeleinrichtung 30 ein Regelzyklus durchgeführt. Die einzelnen Elemente des Flüssigkristallphasenmodulators 16 werden zum Beispiel ausgehend von einer Anfangseinstellung derart abgeändert, bis das Empfangssignal an der Empfangseinrichtung in dem Sensor 12 maximal wird. Dann ist ein Zustand erreicht, in dem die diffusen Streueigenschaften des Objektes 22 durch die räumliche Phasenmodulation des Lichtes weitgehend kompensiert werden.

Bei einer Verfahrensführung wird mit Hilfe der Regeleinrichtung 30 fortlaufend eine entsprechende Optimierung vorgenommen. Dabei kann die Regeleinrichtung 30 Modulationsmuster, die an dem Modulator 16 zu früheren Zeitpunkten eingestellt waren, in der Speichereinrichtung 30 ablegen. Das Muster muss dann nur "nachgeführt" werden, wobei nur die Voreinstellung entsprechend angepasst werden muss, wenn sich die Verhältnisse im Überwachungsraum ändern, also zum Beispiel das Objekt 22 sich bewegt oder ein anderes Objekt eintritt.

Die erfindungsgemäße Anordnung kann jedoch auch vorteilhaft eingesetzt werden, wenn das in den Überwachungsraum eintretende Objekt nicht diffus reflektierend ist. Bei hoch reflektierenden Objekten, zum Beispiel spiegelnden Flächen oder Folien, kann es vorkommen, dass das reflektierte Licht eine derart hohe Intensität hat, dass die Empfangseinrichtung im Sensor 12 zur Übersteuerung neigt. Aus dem Empfangssignal kann die Regeleinrichtung 30 ein Modulationsmuster für den räumlichen Phasenmodulator 16 ermitteln, dass die Wellenfront des ausgesendeten Lichts 14 derart verändert wird, dass trotz der spiegelnden Fläche des Objektes das reflektierte Licht nicht gerichtet in Richtung des Sensors 12 sondern ungerichtet in den Halbraum zurück reflektiert wird.

Bei einer erfindungsgemäßen optischen Sensoranordnung kann es sich um einen Objektfeststellungssensor handeln, der wie beschrieben zum Beispiel einen Gefahrbereich einer Maschine überwacht. Andere Anwendungen sehen als optische Sensoranordnung einen Entfernungsmesser zum Beispiel nach dem Lichtlaufzeitprinzip oder nach dem Triangulationsprinzip vor.

### Bezugszeichenliste

- 10: optische Sensoranordnung
- 12: optischer Sensor
- 14: ausgesendetes Licht
- 16: Modulator zur räumlichen Modulation
- 17, 18, 19: Wellenfront
- 20: Licht
- 22: Objekt
- 24, 26: reflektiertes Licht
- 30: Regeleinrichtung
- 32: Speichereinrichtung

## Patentansprüche

1. Optische Sensoranordnung (10) zur Detektion von Objekten (22) in einem Überwachungsraum mit
- einer kohärenten Lichtquelle, die Licht (14) in einen zu überwachenden Überwachungsraum aussendet,
- wenigstens einem Lichtempfänger zum Empfang von Licht, das von einem Objekt (22) im Überwachungsraum reflektiert wird, und zur Erzeugung eines Empfangssignals,
- einem einstellbaren Modulator (16) im Strahlengang des ausgesendeten Lichtes zur räumlichen Modulation des in den Überwachungsraum ausgesendeten Lichtes, und
- einer mit dem Modulator (16) verbundenen Regeleinrichtung (30) zur Einstellung der räumlichen Modulation des in den Überwachungsraum ausgesendeten Lichtes in Abhängigkeit des Empfangsignals,
**dadurch gekennzeichnet, dass**
die Regeleinrichtung (30) zu einer Einstellung des Modulators (16) zu einer derartigen Manipulation der Wellenfront (19) ausgestaltet ist, dass durch die räumliche Modulation der Phase des in den Überwachungsraum ausgesendeten Lichts
(i) eine diffuse Streuung des ausgesendeten Lichtes an dem Objekt (22) kompensiert wird oder
(ii) das empfangene Lichtsignal einem Lichtsignal mit einem höheren diffusen Anteil entspricht.

2. Optische Sensoranordnung nach Anspruch 1, **dadurch gekennzeichnet, dass** der Modulator (16) zur räumlichen Modulation der Phase des in den Überwachungsraum gesendeten Lichtes ausgestaltet ist.

3. Optische Sensoranordnung nach Anspruch 2, **dadurch gekennzeichnet, dass** die Regeleinrichtung (30) zur derartigen Einstellung des Modulators (16) ausgestaltet ist, dass - bewirkt durch die eingestellte räumliche Modulation der Phase des in den Überwachungsraum gesendeten Lichtes - das an dem Objekt (22) in dem Überwachungsraum reflektierte Licht (24) auf den wenigstens einen Lichtempfänger gerichtet ist.

4. Optische Sensoranordnung nach einem der Ansprüche 1 bis 3, **dadurch gekennzeichnet, dass** die Regeleinrichtung (30) derart ausgestaltet ist, dass sie den Modulator (16) wenigstens einmal zur Maximierung des Empfangssignals einstellt.

5. Optische Sensoranordnung nach einem der Ansprüche 1 oder 2, **dadurch gekennzeichnet, dass** die Regeleinrichtung (30) derart ausgestaltet ist, dass sie den Modulator (16) zur Begrenzung der Signaldynamik des Empfangssignals einstellt.

6. Optische Sensoranordnung nach einem der Ansprüche 1 bis 5, **dadurch gekennzeichnet, dass** der Modulator (16) eine Flüssigkristallmatrix umfasst, deren Elemente mit Hilfe der Regeleinrichtung (30) schaltbar sind.

7. Optische Sensoranordnung nach einem der Ansprüche 1 bis 6, **gekennzeichnet durch** eine Speichereinrichtung (32) zum Speichern eines oder mehrerer an dem Modulator (16) zeitlich vorher eingestellter Modulationsmuster.

8. Optische Sensoranordnung nach einem der Ansprüche 1 bis 7, **dadurch gekennzeichnet, dass** sie einen Objektfeststellungssensor (10)
umfasst, der die Anwesenheit oder Abwesenheit eines Objekts (22) in einem Überwachungsraum feststellt.

9. Optische Sensoranordnung nach Anspruch 8, **dadurch gekennzeichnet, dass** der Überwachungsraum der Gefahrenbereich einer Maschine ist und der Objektfeststellungssensor (10) ein Abschaltsignal für die Maschine und/oder ein Warnsignal erzeugt, wenn sich ein unerwartetes Objekt (22) im Überwachungsraum befindet.

10. Optische Sensoranordnung nach einem der Ansprüche 1 bis 7, **dadurch gekennzeichnet, dass** sie eine Entfernungsmessanordnung umfasst, die ausgestaltet ist, um aus dem Empfangssignal die Entfernung eines Objekts im Überwachungsraum zu bestimmen.

11. Optische Sensoranordnung nach Anspruch 10, **dadurch gekennzeichnet, dass** sie ausgestaltet ist, die Entfernung nach dem Triangulationsprinzip zu bestimmen.

12. Optische Sensoranordnung nach Anspruch 10, **dadurch gekennzeichnet, dass** sie ausgestaltet ist, die Entfernung aus der Lichtlaufzeit des in den Überwachungsraum ausgesendeten und von einem Objekt reflektierten Lichts zu bestimmen.

13. Verfahren zur optischen Detektion von Objekten (22) in einem Überwachungsraum, bei dem der Überwachungsraum mit kohärentem Licht (14) beleuchtet wird und aus dem Überwachungsraum reflektiertes Licht (24, 26) zur Erzeugung eines Empfangssignals verwendet wird,
**dadurch gekennzeichnet, dass**
durch Manipulation der Wellenfront (19) die Phase des in den Überwachungsraum ausgesendeten Lichts in Abhängigkeit des Empfangssignals derart räumlich moduliert wird,
(i) dass eine diffuse Streuung des ausgesendeten Lichtes an dem Objekt (2) kompensiert wird oder
(ii) dass das empfangene Lichtsignal einem Lichtsignal mit höherem diffusen Anteil entspricht.

14. Verfahren nach Anspruch 13, **dadurch gekennzeichnet, dass** die Phase des in den Überwachungsraum gesendeten Lichtes räumlich moduliert wird.

15. Verfahren nach einem der Ansprüche 13 oder 14, **dadurch gekennzeichnet, dass** das in den Überwachungsraum gesendete Licht derart räumlich moduliert wird, dass an einem Objekt (22) im Überwachungsraum reflektiertes Licht (24) auf wenigstens eine das Empfangssignal bereitstellende Lichtempfangseinrichtung gerichtet wird.

16. Verfahren nach einem der Ansprüche 13 bis 15, **dadurch gekennzeichnet, dass** das in den Überwachungsraum gesendete Licht derart in Abhängigkeit des Empfangssignals räumlich moduliert wird, dass das Empfangssignal maximal ist.

17. Verfahren nach einem der Ansprüche 13 oder 14, **dadurch gekennzeichnet, dass** das in den Überwachungsraum gesendete Licht derart in Abhängigkeit des Empfangssignals räumlich moduliert wird, dass die Signaldynamik des Empfangssignals unterhalb eines vorbestimmten Schwellwertes liegt.

18. Verfahren nach einem der Ansprüche 13 bis 17, **dadurch gekennzeichnet, dass** die Einstellung der räumlichen Modulation in Abhängigkeit des Empfangssignals fortlaufend oder in vorgegebenen zeitlichen Abständen durchgeführt wird.

19. Verfahren nach einem der Ansprüche 13 bis 18, **dadurch gekennzeichnet, dass** die Einstellung der räumlichen Modulation in Abhängigkeit des Empfangssignals wenigstens einmal zu Beginn eines Detektionsvorgangs durchgeführt wird.

20. Verfahren nach einem der Ansprüche 13 bis 19, **dadurch gekennzeichnet, dass** bei der Festlegung des räumlichen Modulationsmusters ein zu einem früheren Zeitpunkt eingestelltes Modulationsmuster berücksichtigt wird oder mehrere zu früheren Zeitpunkten eingestellte Modulationsmuster berücksichtigt werden.

21. Verfahren nach einem der Ansprüche 13 bis 20, **dadurch gekennzeichnet, dass** es zur Feststellung der Anwesenheit oder Abwesenheit eines Objekts (22) in einem Überwachungsraum eingesetzt wird.

22. Verfahren nach Anspruch 21, **dadurch gekennzeichnet, dass** es zur Sicherung des Gefahrenbereiches einer Maschine eingesetzt wird, wobei in Abhängigkeit des Empfangssignals ein Abschaltsignal für die Maschine und/oder ein Warnsignal erzeugt wird.

23. Verfahren nach einem der Ansprüche 13 bis 20, **dadurch gekennzeichnet, dass** es zur Bestimmung der Entfernung eines Objektes im Überwachungsraum eingesetzt wird.

24. Verfahren nach Anspruch 23, **dadurch gekennzeichnet, dass** die Entfernung nach dem Triangulationsprinzip bestimmt wird.

25. Verfahren nach Anspruch 23, **dadurch gekennzeichnet, dass** die Entfernung aus der Lichtlaufzeit von Licht bestimmt wird, das in
den Überwachungsraum ausgesendet wird und an einem Objekt reflektiert wird.

## Claims

1. An optical sensor arrangement (10) for detecting objects (22) in a monitored space comprising
- a coherent light source which transmits light (14) into a monitored space to be monitored;
- at least one light receiver for receiving light which is reflected by an object (22) in the monitored space and for generating a received signal;
- an adjustable modulator (16) in the beam path of the transmitted light for the spatial modulation of the light transmitted into the monitored space; and
- a regulating device (30) connected to the modulator (16) for setting the spatial modulation of the light transmitted into the monitored space in dependence on the received signal,
**characterised in that**
the regulating device (30) is designed to make an adjustment of the modulator (16) for such a manipulation of the wavefront (19) that, by the spatial modulation of the phase of the light transmitted into the monitored space,
(i) a diffuse scattering of the transmitted light at the object (22) is compensated; or
(ii) the received light signal corresponds to a light signal having a higher proportion of diffuse light.

2. An optical sensor arrangement in accordance with claim 1, **characterised in that** the modulator (16) is designed for the spatial modulation of the phase of the light transmitted into the monitored space.

3. An optical sensor arrangement in accordance with claim 2, **characterised in that** the regulating device (30) is designed for such a setting of the modulator (16) that - caused by the set spatial modulation of the phase of the light transmitted into the monitored space - the light (24) reflected at the object (22) in the monitored space is directed to the at least one light receiver.

4. An optical sensor arrangement in accordance with any one of the claims 1 to 3, **characterised in that** the regulating device (30) is designed such that it sets the modulator (16) at least once to maximise the received signal.

5. An optical sensor arrangement in accordance with one of the claims 1 or 2, **characterised in that** the regulating device (30) is designed such that it sets the modulator (16) for limiting the signal dynamics of the received signal.

6. An optical sensor arrangement in accordance with any one of the claims 1 to 5, **characterised in that** the modulator (16) includes a liquid crystal matrix whose elements can be switched with the aid of the regulating device (30).

7. An optical sensor arrangement in accordance with any one of the claims 1 to 6, **characterised by** a memory device (32) for storing one or more modulation patterns set previously in time at the modulator (16).

8. An optical sensor arrangement in accordance with any one of the claims 1 to 7, **characterised in that** it includes an object detection sensor (10) which detects the presence or absence of an object (22) in a monitored space.

9. An optical sensor arrangement in accordance with claim 8, **characterised in that** the monitored space is the danger zone of a machine and the object detection sensor (10) generates a deactivation signal for the machine and/or generates a warning signal when an unexpected object (22) is located in the monitored space.

10. An optical sensor arrangement in accordance with any one of the claims 1 to 7, **characterised in that** it includes a distance measurement arrangement which is designed to determine the distance of an object in the monitored space from the received signal.

11. An optical sensor arrangement in accordance with claim 10, **characterised in that** it is designed to determine the distance in accordance with the triangulation principle.

12. An optical sensor arrangement in accordance with claim 10, **characterised in that** it is designed to determine the distance from the transit time of the light transmitted into the monitored space and reflected by an object.

13. A method for the optical detection of objects (22) in a monitored space, wherein the monitored space is illuminated by coherent light (14) and light (24, 26) reflected from the monitored space is used for generating a received signal,
**characterised in that**
the phase of the light transmitted into the monitored space is spatially modulated in dependence on the received signal by manipulating the wavefront (19) such
(i) that a diffuse scattering of the transmitted light at the object (2) is compensated; or
(ii) that the received light signal corresponds to a light signal having a higher proportion of diffuse light.

14. A method in accordance with claim 13, **characterised in that** the phase of the light transmitted into the monitored space is spatially modulated.

15. A method in accordance with one of the claims 13 or 14, **characterised in that** the light transmitted into the monitored one is modulated spatially such that light (24) reflected at an object (22) in the monitored space is directed to at least one light reception device providing the received signal.

16. A method in accordance with any one of the claims 13 to 15, **characterised in that** the light transmitted into the monitored space is modulated spatially in dependence on the received signal such that the received signal is at a maximum.

17. A method in accordance with one of the claims 13 or 14, **characterised in that** the light transmitted into the monitored space is spatially modulated in dependence on the received signal such that the signal dynamics of the received signal are below a predetermined threshold value.

18. A method in accordance with any one of the claims 13 to 17, **characterised in that** the setting of the spatial modulation is carried out continuously or at predefined time intervals in dependence on the received signal.

19. A method in accordance with any one of the claims 13 to 18, **characterised in that** the setting of the spatial modulation is carried out at least once at the start of a detection process in dependence on the received signal.

20. A method in accordance with any one of the claims 13 to 19, **characterised in that**, on the fixing of the spatial modulation pattern, a modulation patter set at an earlier point in time is taken into account or a plurality of modulation patterns set at earlier points in time are taken into account.

21. A method in accordance with any one of the claims 13 to 20, **characterised in that** it is used for determining the presence or absence of an object (22) in a monitored space.

22. A method in accordance with claim 21, **characterised in that** it is used for securing the danger space of a machine, with a deactivation signal for the machine and/or a warning signal being generated in dependence on the received signal.

23. A method in accordance with any one of the claims 13 to 20, **characterised in that** it is used for determining the distance of an object in the monitored space.

24. A method in accordance with claim 23, **characterised in that** the distance is determined in accordance with the triangulation principle.

25. A method in accordance with claim 23, **characterised in that** the distance is determined from the time of flight of light which is transmitted into the monitored space and is reflected at an object.

## Revendications

1. Agencement de capteur optique (10) pour la détection d'objets (22) dans un espace de surveillance, comprenant
- une source de lumière cohérente, qui émet de la lumière (14) dans un espace de surveillance qu'il s'agit de surveiller,
- au moins un récepteur de lumière pour recevoir de la lumière qui est réfléchie par un objet (22) dans l'espace de surveillance, et pour engendrer un signal de réception,
- un modulateur réglable (16) dans le trajet des rayons de la lumière émise pour la modulation dans l'espace de la lumière émise vers l'espace de surveillance, et
- un dispositif de régulation (30) relié au modulateur (16) pour le réglage de la modulation dans l'espace de la lumière émise dans l'espace de surveillance en fonction du signal de réception,
**caractérisé en ce que**
le dispositif de régulation (30) est conçu pour un réglage du modulateur (16) afin d'effectuer une manipulation du front d'onde (19) telle que par la modulation dans l'espace de la phase de la lumière émise dans l'espace de surveillance
(i) une dispersion diffuse de la lumière émise vers l'objet (22) est compensée, ou bien
(ii) le signal lumineux reçu correspond à un signal lumineux avec un une part diffuse plus élevée.

2. Agencement de capteur optique selon la revendication 1, **caractérisé en ce que** le modulateur (16) est conçu pour une modulation dans l'espace de la phase de la lumière émise dans l'espace de surveillance.

3. Agencement de capteur optique selon la revendication 2, **caractérisé en ce que** le dispositif de régulation (30) est conçu pour un réglage du modulateur (16) tel que, provoquée par la modulation dans l'espace réglée de la phase de la lumière émise dans l'espace de surveillance, la lumière (24) réfléchie sur l'objet (22) dans l'espace de surveillance est orientée vers ledit au moins un récepteur de lumière.

4. Agencement de capteur optique selon l'une des revendications 1 à 3, **caractérisé en ce que** le dispositif de régulation (30) est conçu de telle manière qu'il règle le modulateur (16) au moins une fois pour maximiser le signal de réception.

5. Agencement de capteur optique selon l'une des revendications 1 ou 2, **caractérisé en ce que** le dispositif de régulation (30) est conçu de telle manière qu'il règle le modulateur (16) pour limiter la dynamique du signal de réception.

6. Agencement de capteur optique selon l'une des revendications 1 à 5, **caractérisé en ce que** le modulateur (16) comprend une matrice de cristaux liquides dont les éléments peuvent être commutés à l'aide du dispositif de régulation (30).

7. Agencement de capteur optique selon l'une des revendications 1 à 6, **caractérisé par** un système à mémoire (32) pour mémoriser un ou plusieurs modèles de modulation réglés temporellement auparavant au niveau du modulateur (16).

8. Agencement de capteur optique selon l'une des revendications 1 à 7, **caractérisé en ce qu'**il comprend un capteur de constatation d'objet (10), qui constate la présence ou l'absence d'un objet (22) dans un espace de surveillance.

9. Agencement de capteur optique selon la revendication 8, **caractérisé en ce que** l'espace de surveillance est la zone à risque d'une machine, et le capteur de constatation d'objet (10) engendre un signal de coupure pour la machine et/ou un signal d'avertissement si un objet inattendu (22) se trouve dans l'espace de surveillance.

10. Agencement de capteur optique selon l'une des revendications 1 à 7, **caractérisé en ce qu'**il comprend un agencement de mesure d'éloignement, qui est conçu pour déterminer l'éloignement d'un objet dans l'espace de surveillance à partir du signal de réception.

11. Agencement de capteur optique selon la revendication 10, **caractérisé en ce qu'**il est conçu pour déterminer l'éloignement selon le principe de triangulation.

12. Agencement de capteur optique selon la revendication 10, **caractérisé en ce qu'**il est conçu pour déterminer l'éloignement à partir de la durée de propagation de la lumière émise dans l'espace de surveillance et réfléchie par un objet.

13. Procédé pour la détection optique d'objets (22) dans un espace de surveillance, dans lequel l'espace de surveillance est éclairé avec de la lumière cohérente (14), et l'on utilise la lumière réfléchie (24, 26) sortant de l'espace de surveillance pour engendrer un signal de réception,
**caractérisé en ce que**
par manipulation du front d'onde (19) on module dans l'espace la phase de la lumière émise dans l'espace de surveillance en fonction du signal de réception de telle façon que
(i) on compense une dispersion diffuse de la lumière émise au niveau de l'objet (2), ou bien
(ii) le signal de lumière reçue correspond à un signal de lumière avec une part diffuse plus élevée.

14. Procédé selon la revendication 13, **caractérisé en ce que** la phase de la lumière émise dans l'espace de surveillance est modulée dans l'espace.

15. Procédé selon l'une des revendications 13 ou 14, **caractérisé en ce que** la lumière émise dans l'espace de surveillance est modulée dans l'espace de telle façon que la lumière réfléchie (24) sur un objet (22) dans l'espace de surveillance est orientée vers au moins un dispositif de réception de lumière qui fournit le signal de réception.

16. Procédé selon l'une des revendications 13 à 15, **caractérisé en ce que** la lumière émise vers l'espace de surveillance est modulée dans l'espace et en fonction du signal de réception de telle manière que le signal de réception est maximum.

17. Procédé selon l'une des revendications 13 ou 14, **caractérisé en ce que** la lumière émise vers l'espace de surveillance est modulée dans l'espace en fonction du signal de réception de telle façon que la dynamique du signal de réception se trouve au-dessous d'une valeur seuil prédéterminée.

18. Procédé selon l'une des revendications 13 à 17, **caractérisé en ce que** le réglage de la modulation dans l'espace en fonction du signal de réception est exécuté en permanence ou à intervalles temporels prédéterminés.

19. Procédé selon l'une des revendications 13 à 18, **caractérisé en ce que** le réglage de la modulation dans l'espace en fonction du signal de réception est exécuté au moins une fois au commencement d'un processus de détection.

20. Procédé selon l'une des revendications 13 à 19, **caractérisé en ce que** lors de la détermination du modèle de modulation dans l'espace en tient compte d'un modèle de modulation établi à un instant antérieur, ou bien on tient compte de plusieurs modèles de modulation établis à des instants antérieurs.

21. Procédé selon l'une des revendications 13 à 20, **caractérisé en ce qu'**il est employé pour constater la présence ou l'absence d'un objet (22) dans un espace de surveillance.

22. Procédé selon la revendication 21, **caractérisé en ce qu'**il est employé pour sécuriser la zone à risque d'une machine, de sorte que l'on engendre un signal de coupure pour la machine et/ou un signal d'avertissement en fonction du signal de réception.

23. Procédé selon l'une des revendications 13 à 20, **caractérisé en ce qu'**il est employé pour déterminer l'éloignement d'un objet dans l'espace de surveillance.

24. Procédé selon la revendication 23, **caractérisé en ce que** l'éloignement est déterminé selon le principe de triangulation.

25. Procédé selon la revendication 23, **caractérisé en ce que** l'éloignement est déterminé à partir de la durée de propagation de la lumière qui est émise vers l'espace de surveillance et qui est réfléchie sur un objet.
